## Europäisches Patentamt

## European Patent Office

## Office européen des brevets

(11) veröffentlichungsnummer: **0 016 400**

**A2**

(12) **EUROPÄISCHE PATENTANMELDUNG**

(21) Anmeldenummer: **80101226.1**

(22) Anmeldetag: **11.03.80**

(51) Int. Cl.³: **G 06 K 9/20**
**G 06 K 7/10**

(30) Priorität: **20.03.79 DE 2910854**

(43) Veröffentlichungstag der Anmeldung:
**01.10.80 Patentblatt 80/20**

(84) Benannte Vertragsstaaten:
**BE FR GB IT NL**

(71) Anmelder: **Agfa-Gevaert AG**
**Camera-Werk Patent- und Lizenzwesen Postfach**
**D-8000 München 90(DE)**

(72) Erfinder: **Pfeifer, Josef**
**Ter Meer-Strasse 10**
**D-8025 Unterhaching(DE)**

(72) Erfinder: **Paulus, Rudolf**
**Iltisstrasse 28**
**D-8000 München 82(DE)**

(72) Erfinder: **Zieran, Eberhard**
**Jos.-Würth-Strasse 9**
**D-8022 Grünwald(DE)**

(54) **Informationsverarbeitungsvorrichtung zur Aufnahme und zur Weiterverarbeitung von auf einem Informationsträger befindlicher optischer Information.**

(57) Eine Informationsverarbeitungsvorrichtung zur Aufnahme und Weiterverarbeitung von optischer Information umfaßt eine Handleseeinrichtung, die zur Aufnahme der Information entlang einer ersten Richtung von Hand über den Informationsträger geführt wird, wobei die Information entlang einer zweiten Richtung senkrecht zur ersten Richtung, z.B. Spalte für Spalte innerhalb der überstrichenen Zeile, abgetastet wird. Die Handleseeinrichtung umfaßt eine Einrichtung zum Takten der Abtastung entlang der zweiten Richtung in Abhängigkeit von der Relativgeschwindigkeit zwischen Informationsträger und Handleseeinrichtung.

EP 0 016 400 A2

./...

Fig.1

AGFA-GEVAERT AG - Leverkusen

Camera-Werk München
Patent- und Lizenzwesen

CW 2237.7 PB                                    10-re-hh
                                               0342A


## Informationsverarbeitungsvorrichtung zur Aufnahme und zur Weiterverarbeitung von auf einem Informationsträger befindlicher optischer Information

Die Erfindung betrifft eine Informationsverarbeitungsvorrichtung zur Aufnahme und Weiterverarbeitung von auf einem Informationsträger befindlicher optischer Information.

Es ist ein als Handleser ausgebildeter Belegleser bekannt, der von Hand über die zu erfassende Zeile geführt wird, wobei der Handleser in der Lage ist, die Schriftzeichen einer bestimmten Normschrift (OCR-A oder OCR-B) über eine elektronische Buchstaben-Erkennungseinheit zu erkennen, die dann an eine Datenstation weitergegeben und in geeigneter Weise ausgewertet werden können. Dieses Handlesegerät ist jedoch bei der Erkennung von Zeichen auf eine oder mehrere Normschriften beschränkt.

Demgegenüber liegt der vorliegenden Erfindung die Aufgabe zugrunde, eine Informationsverarbeitungsvorrichtung gemäß dem Gattungsbegriff des Hauptanspruches so weiterzubilden, daß jede beliebige optische Information aufgenommen und weiterverarbeitet werden kann, wobei zusätzlich die ordnungsgemäße Informationsverarbeitung unabhängig von der Geschwindigkeit, mit der der Benutzer die Handleseeinrichtung über den Informationsträger führt, sein soll.

CW 2237.7 PB                           - 2 -

Erfindungsgemäß ist daher eine Einrichtung innerhalb der Handhabungseinheit zum punktweisen Abtasten der Information entlang einer zweiten Richtung im wesentlichen senkrecht zur ersten Richtung, z. B. Spalte für Spalte innerhalb der Zeile, und eine Einrichtung zum Takten der zeitlichen Folge der Abtastung entlang der zweiten Richtung in Abhängigkeit von der Relativgeschwindigkeit zwischen der Handhabungseinheit und dem Informationsträger vorgesehen.

Die auf diese Weise gewonnene Folge von den Helligkeitswerten der einzelnen Punkte des abgetasteten Bereiches entsprechenden elektrischen Signalen in Form von Ladungen, Spannungen, Strömen oder dergleichen kann nach geeigneter Aufbereitung und Weiterverarbeitung einer Wiedergabeeinheit zugeführt werden, in der sie z. B. über ein Display oder eine Kopie zurück in lesbare Information gebracht werden kann.

Zum spaltenweisen Abtasten der Information ist vorzugsweise ein dem Informationsträger zugewandtes Fotodiodenarray vorgesehen. Die Länge des Fotodiodenarrays legt die maximale Breite des jeweils abzutastenden Bereiches fest.

Die Einrichtung zum Takten der zeitlichen Folge der spaltenweisen Abtastung beinhaltet vorzugsweise einen Wegaufnehmer zum Messen des von der Handleseeinrichtung relativ zum Informationsträger zurückgelegten Weges. Insbesondere kann der Wegaufnehmer ein an der Handleseeinrichtung gelagertes Reibrad beinhalten, über das sich die Handleseeinrichtung in Betriebsfunktion am Informationsträgers abstützt. Über geeignete Mittel, z. B. auf optoelektronischem Wege, kann dann die Drehung des Reibrades abgegriffen und hieraus die zur Taktung der spaltenweisen Abtastung erforderliche Signalfolge gewonnen werden.

Weitere vorteilhafte Merkmale der Erfindung ergeben sich aus den übrigen Unteransprüchen im Zusammenhang mit der anschließenden Beschreibung, in der die Erfindung anhand

CW 2237.7 PB                    - 3 -

der Zeichnung näher erläutert wird. In der Zeichnung
zeigen:

Figur 1   die Informationsverarbeitungsvorrichtung in
          schematischer Darstellung,

Figur 2   ein Blockschaltbild der Informationsverarbeitungsvorrichtung,

Figur 3   eine Schieberegisteranordnung der Informationsverarbeitungsvorrichtung und

Figur 4   ein die Informationsaufnahme und -wiedergabe
          erläuterndes Flußdiagramm.

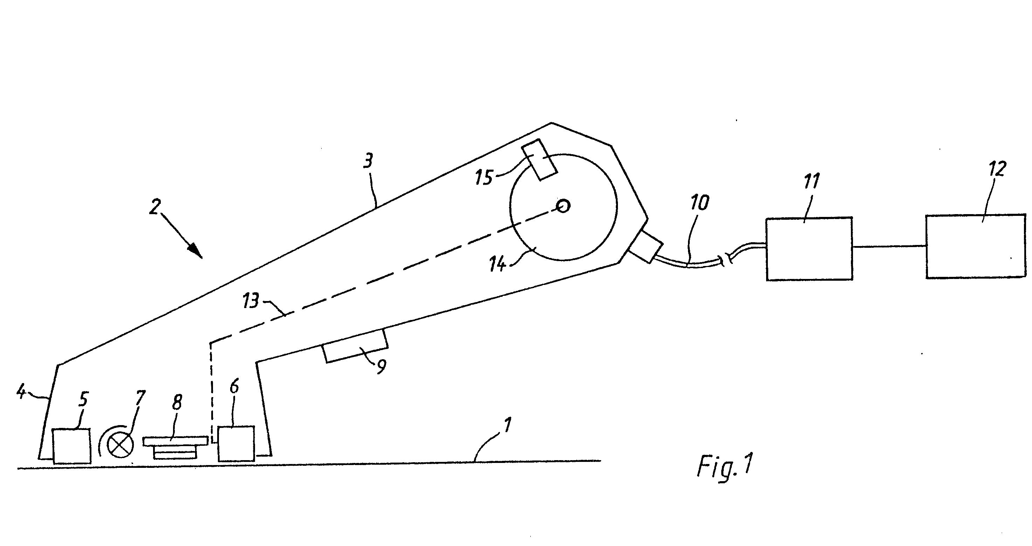

In Figur 1 ist mit der Bezugsziffer 1 ein Informationsträger, beispielsweise ein beschriftetes Blatt, im Schnitt
bezeichnet. Eine Handleseeinrichtung 2 umfaßt einen Griff
3 sowie einen Lesekopf 4. An der unteren, dem Informationsträger 1 zugewandten Seite des Lesekopfes 4 sind Rollen 5, 6 gelagert, über die sich die Handhabungseinheit am
Informationsträger 1 abstützt. Mit der Bezugsziffer 7 ist
eine Beleuchtungseinheit zum Beleuchten des jeweils abzutastenden Bereiches des Informationsträgers 1 bezeichnet,
mit der Bezugsziffer 8 ein kurz oberhalb des abzutastenden
Bereiches angeordnetes Fotodiodenarray.

Im Betrieb wird die Handhabungseinheit 2 von Hand in einer
Richtung senkrecht zur Zeichenebene mit beliebiger Geschwindigkeit über die aufzunehmende Information geführt.
Durch Drücken der Taste 9 wird das Gerät in Aufnahmebereitschaft versetzt. Hierbei wird in noch zu beschreibender Weise die abzutastende Information punktweise über das
Fotodiodenarray 8 abgetastet und in eine Folge von elektrischen Signalen umgewandelt. Die Signalfolge wird über
ein an die Handhabungseinheit 2 angeschlossenes, flexibles Kabel 10 einer Speicher- und Verarbeitungseinheit 11 zugeführt, wo die Signale in geeigneter Weise verarbeitet werden. Schließlich werden die Signale einer Darstellungseinheit 12 zugeführt, wo entweder auf einem Monitor oder einem konventionellen Fernsehgerät ein sichtbares Bild der aufgenommenen Information erzeugt oder in z. B. aus der Datenfernübertragung bekannter Weise eine Kopie der aufgenommenen Information hergestellt wird.

Wie weiter oben bereits angesprochen, wird der aufzunehmende Informationsstreifen spaltenweise über das Fotodiodenarray 8 abgetastet. Die Abtastfolge ist festgelegt durch die Forderung nach einem konstanten räumlichen Abstand zweier benachbarter abgetasteter Spalten. Die Größe des Abstands ergibt sich aus dem gewünschten Auflösungsvermögen der Apparatur. Da die Handleseeinrichtung 2 von Hand und daher mit wechselnder Geschwindigkeit geführt ist, ist eine geschwindigkeitsabhängige Taktung des Diodenarrays vorgesehen, die eine äquidistante spaltenweise Abtastung gewährleistet. Hierzu ist die Rolle 6 über eine Antriebsverbindung 13 mit einer im Griff 3 drehbar gelagerten Meßscheibe 14 verbunden, von der über die optische Abtasteinrichtung 15 die jeweilige Relativgeschwindigkeit zwischen Informationsträger 1 und Handhabungseinheit 2 abgegriffen wird. Hieraus wird ein der Relativgeschwindigkeit proportionales Taktsignal gewonnen, welches den Lese- bzw. Ausspeichertakt zum spaltenweisen Abtasten über das Fotodiodenarray 8 darstellt.

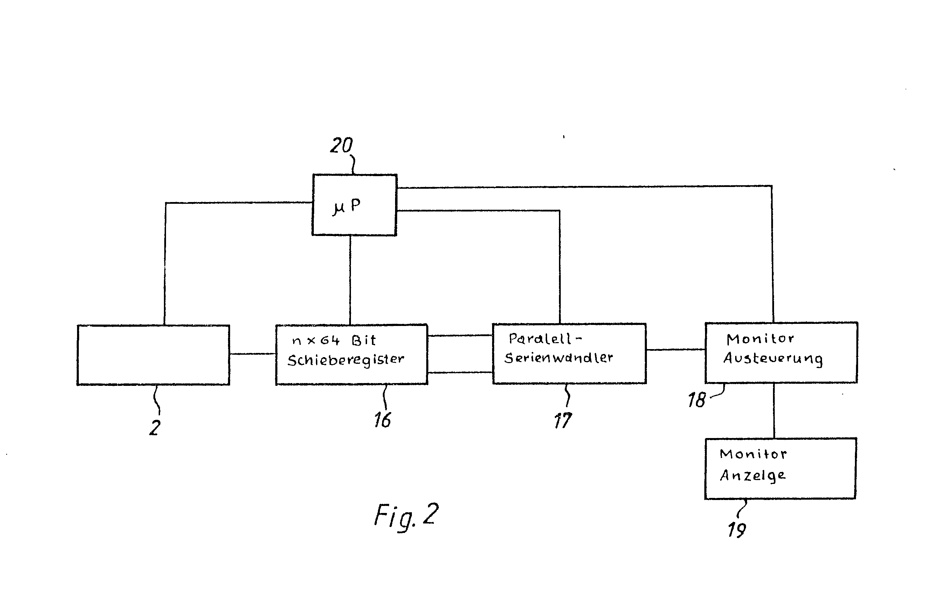

Aus Figur 2 wird ersichtlich, daß die in der Aufnahmeeinrichtung 2 erzeugte elektrische Signalfolge seriell in ein n x 64 bit-Schieberegister 16 eingespeist wird, wobei n der maximal einspeicherbaren Zeilenlänge entspricht. Das Fotodiodenarray 8 umfaßt beispielsweise 64 Fotodioden, so daß zur Speicherung einer zusammenhängenden Informationszeile n x 64 Speicherplätze im Schieberegister 16 benötigt werden. Vom Schieberegister 16 wird die Signalfolge einem Parallel-Serienwandler 17 zugeführt. Von hier werden die Signale über eine Monitor-Ansteuerung 18 in eine Monitor-Anzeige verarbeitet. Alternativ kann die Information auch in einem herkömmlichen Fernsehgerät dargestellt werden oder es wird in einem Matrix-Kopiergerät in bekannter Weise eine Kopie der abgetasteten Information erzeugt. Zur Steuerung der einzelnen Verarbeitungsschritte ist ein Mikroprozessor 20 vorgesehen.

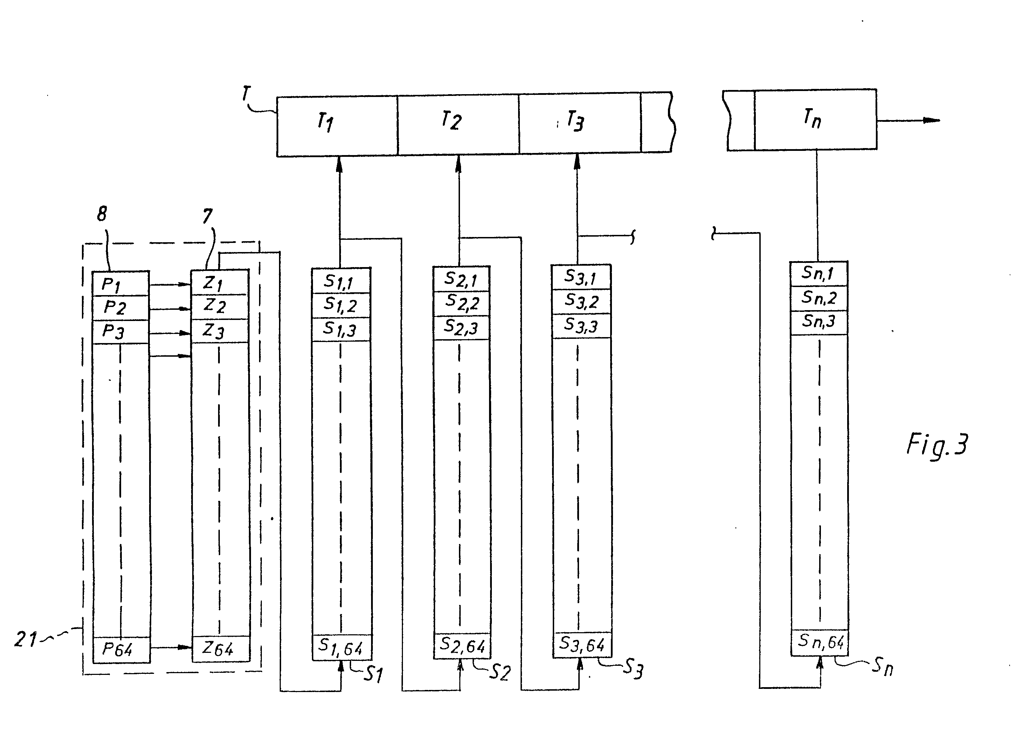

Gemäß Fig. 3 werden die einzelnen Meßwerte der Fotodioden $P_1$ bis $P_{64}$ des Fotodiodenarrays 8 den ihnen zugeordneten Speicherplätzen $Z_1$ bis $Z_{64}$ des Zwischenspeichers Z übertragen. Die aus dem Fotodiodenarray 8 und dem Zwischenspeicher Z zusammengesetzte Einrichtung ist insgesamt als CCD (Charge Coupled Device) 21 bekannt. Mit jedem Takt wird der Inhalt der Speicherplätze $Z_1$ bis $Z_{64}$ seriell in das Schieberegister $S_1$ eingegeben, wodurch sich im Laufe eines zusammenhängenden Abtastvorgangs die Information zu Schieberegistern mit höheren Indizes fortschiebt. Die in die Schieberegister $S_1$ bis $S_n$ seriell eingegebene Signalfolge wird nach Abschluß eines zusammenhängenden Abtastvorgangs parallel dem Übertragungs-Schieberegister T zugeführt, wobei eine Speicherzeile $T_1$ bis $T_n$ des Schieberegisters T der durch eine der Fotodioden $P_1$ bis $P_{64}$ im Laufe eines Abtastvorgangs abgetasteten strichförmigen Abtastzeile entspricht. Zum Darstellen der gespeicherten Information wird nun Zeile für Zeile einer Display- oder Kopiervorrichtung zugeführt.

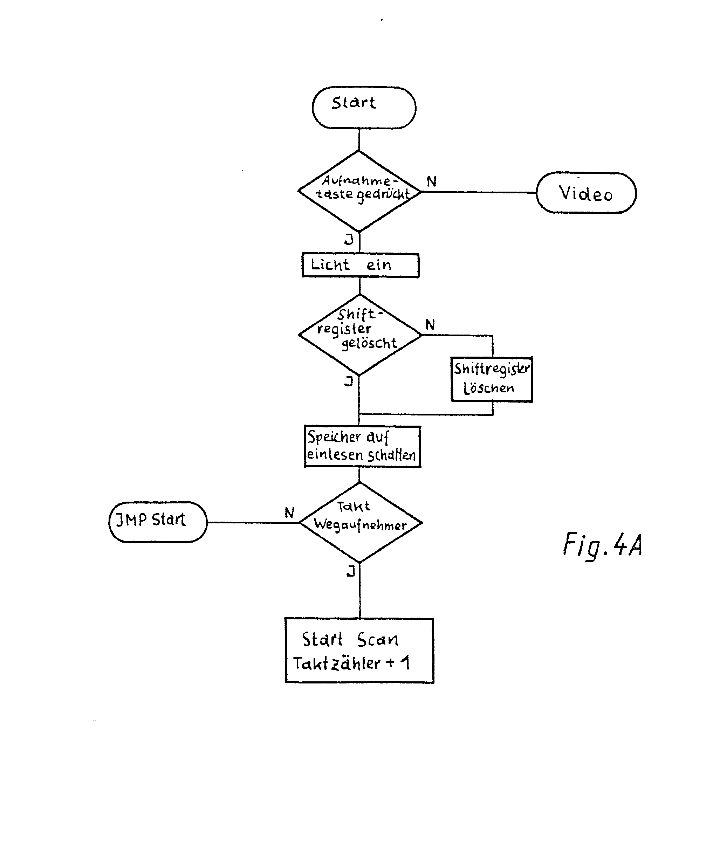

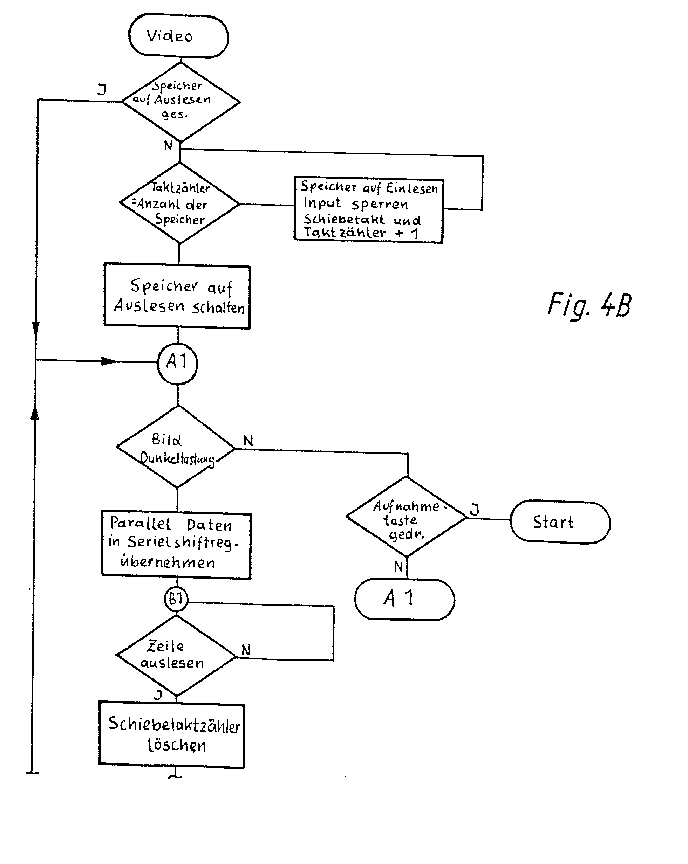

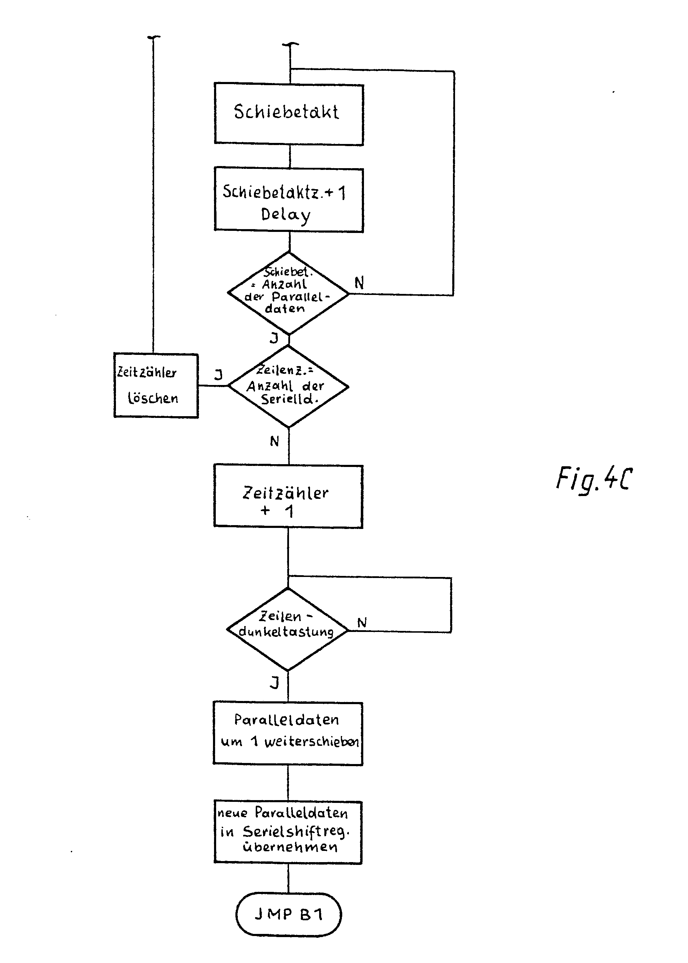

Das Flußdiagramm gemäß Figur 4 stellt den Funktionsablauf der Vorrichtung dar. Wenn die Betriebsspannung des Gerätes eingeschaltet wird, so wird bei nicht gedrückter Aufnahmetaste 9 der Inhalt des n x 64 Bit-Schieberegisters $S_1$ bis $S_n$ auf dem Monitor angezeigt. Sobald die Aufnahmetaste 9 gedrückt ist, wird das n x 64 Bit-Schieberegister gelöscht und die Beleuchtungslampe 7 eingeschaltet. Nun werden mit jedem Takt 64 über das CCD aufgenommene Bit in

das Schieberegister $S_1$ bis $S_n$ eingelesen. Zur Wiedergabe der aufgenommenen Information wird das n x 64 Bit-Schieberegister von Einlesen auf Auslesen ins Anzeigeschieberegister T umgeschaltet. Nun wird der Inhalt einer Zeile, z. B. der Inhalt der Speicherplätze $S_{1,1}$, $S_{2,1}$, $S_{3,1}$, bis $S_{n,1}$ in das Schieberegister T übernommen. Im Schiebetakt wird Bit für Bit zur Anzeige geschoben. Bei jeder Dunkeltastung des Fernsehstrahles des Monitors werden die nächsten Daten von den Schieberegistern $S_1$ bis $S_n$ in das Anzeige-Schieberegister T übernommen.

<u>Hierzu 5 Blatt Zeichnungen</u>

AGFA-GEVAERT AG - Leverkusen

Camera-Werk München
Patent- und Lizenzwesen
CW 2237.7 PB                          10-re-hh
                                      0341A


Ansprüche

1.  Informationsverarbeitungsvorrichtung zur Aufnahme und
    Weiterverarbeitung von auf einem Informationsträger
    befindlicher optischer Information, mit einer Handleseeinrichtung, die auf den Informationsträger aufgelegt und in einer ersten Richtung, z. B. entlang einer
    Zeile, über die aufzunehmende Information geführt
    wird, dadurch gekennzeichnet, daß eine Einrichtung innerhalb der Handleseeinrichtung zum punktweisen Abtasten der Information entlang einer zweiten Richtung im
    wesentlichen senkrecht zur ersten Richtung, z. B.
    Spalte für Spalte innerhalb der Zeile, und eine Einrichtung zum Takten der zeitlichen Folge der Abtastung
    entlang der zweiten Richtung in Abhängigkeit von der
    Relativgeschwindigkeit zwischen der Handleseeinrichtung und dem Informationsträger entlang der ersten
    Richtung vorgesehen sind.

2.  Informationsverarbeitungsvorrichtung nach Anspruch 1,
    dadurch gekennzeichnet, daß zum Abtasten der Information entlang der zweiten Richtung ein dem Informationsträger zugewandtes Fotodiodenarray vorgesehen ist.

3.  Informationsverarbeitungsvorrichtung nach Anspruch 1
    oder 2, dadurch gekennzeichnet, daß die Einrichtung
    zum Takten der Abtastfolge einen Wegaufnehmer zum Messen des von der Handhabungseinheit relativ zum Infor-
    mationsträger zurückgelegten Weges beinhaltet.

CW 2237.7 PB                    - 2 -

4. Informationsverarbeitungsvorrichtung nach Anspruch 3, dadurch gekennzeichnet, daß der Wegaufnehmer ein an der Handleseeinrichtung gelagertes Reibrad beinhaltet, über das sich die Handleseeinrichtung in Betriebsposition am Informationsträger abstützt.

5. Informationsverarbeitungsvorrichtung nach einem der vorhergehenden Ansprüche, dadurch gekennzeichnet, daß die Handleseeinrichtung über ein flexibles Kabel mit einer Wiedergabeeinheit verbunden ist.

6. Informationsverarbeitungsvorrichtung nach Anspruch 5, dadurch gekennzeichnet, daß die Wiedergabeeinheit einen Monitor oder ein Fernsehgerät und/oder ein Kopiergerät umfaßt.

7. Informationsverarbeitungsvorrichtung nach Anspruch 5 oder 6, dadurch gekennzeichnet, daß zwischen die Handleseeinrichtung und die Wiedergabeeinheit ein Speicher und ein Wandler zum Speichern der während einer zusammenhängenden Abtastung aufgenommenen Information und zum Umwandeln in zur Verarbeitung in der Wiedergabeeinheit geeignete Form.

Fig.1

Fig. 2

Fig.3

```
                    ┌──────────┐
                    │  Start   │
                    └────┬─────┘
                         │
                      ╱──┴──╲
                    ╱         ╲
                  ╱ Aufnahme-  ╲      N        ┌─────────┐
                 ╲ taste gedrückt╱─────────────│  Video  │
                   ╲           ╱               └─────────┘
                     ╲──┬──╱
                        │ J
                  ┌───────────┐
                  │ Licht ein │
                  └─────┬─────┘
                      ╱─┴─╲
                    ╱       ╲
                  ╱  Shift-  ╲    N
                 ╲  register  ╱───────────┐
                  ╲ gelöscht ╱            │
                    ╲──┬──╱        ┌──────────────┐
                       │ J         │ Shiftregister│
                       │           │   löschen    │
                       │           └──────┬───────┘
                  ┌──────────────┐        │
                  │ Speicher auf │◄───────┘
                  │einlesen schalten│
                  └──────┬───────┘
                      ╱──┴──╲
         ┌─────────┐╱        ╲
         │JMP Start│   Takt    ╲   N
         └─────────┘╲Wegaufnehmer╱──────
                     ╲          ╱
                       ╲──┬──╱
                          │ J
                  ┌───────────────┐
                  │  Start Scan   │
                  │ Taktzähler + 1│
                  └───────────────┘
```

Fig. 4A

Fig. 4B

Fig.4C